# EUROPEAN PATENT APPLICATION

(11) **EP 1 153 540 A2**
(43) Date of publication of application: **14.11.2001**
(21) Application number: 01660090.0
(22) Date of filing: 07.05.2001
(51) Int. Cl.: A01G 1/00, A01G 9/10

(54) **Set for plant cultivation, substrate, compost and composting method**

(30) Priority: 09.05.2000 FI 20001088
(71) Applicant: Svanco Composting OY, 21630 Lielax (FI)
(72) Inventor: Svanström, Mats, 21630 Lielax (FI)
(74) Representative: Heikkilä, Hannes Antero

(57) **Abstract**

The invention relates to a novel and inventive way to utilize residual vegetable matter by composting it according to a new method, to a compost obtained in this way, to a substrate (3) made of said compost and to a new cultivation product (1) made of said substrate. The cultivation product (1) is a combination, where in a container (2), there is arranged substrate (3) and precision sown seeds (4).

## Description

The invention relates to a combination for plat cultivation, compost, substrate and composting method according to the independent claims set forth below. In particular, the invention relates to a novel and inventive method for utilizing residual vegetable matter by composting it in a new way, to a compost thus obtained, to a substrate manufactured thereof and to a new cultivation product made of said substrate.

Fresh herbs and other plants have become more and more important for consumers. Herbs and the like can be purchased for instance in small growing pots which can be watered, so that the plants remain fresh for some time even at home. However, in these pots the plant has germinated and grown to its full length. It must be used fairly soon after purchasing. It is possible to buy compost and seeds separaely, so that the germination can be controlled independently. However, consumers are generally not ready to go to a lot of trouble in order to obtain herbs and other plants they use, which means that the cultivation of home-grown plants should be made easier.

At present, the health effects and ecological features of organically cultivated products are highly appreciated. Their demand, consummation and production have grown. However, the commercial availability of organic food is often limited. While more and more organic herbs and vegetables are being produced, their refining process results in growing amounts of skins and peels and other vegetable waste without any suitable usage.

The German patent publication DE 19512462 discloses an artificial grass, i.e. a carpet made of natural fibers, on top of which, or inside of which, seeds are attached by biological glue. The carpet is stored dry and suitably cut into small pieces in a storage box, where the pieces can be placed in a stack. The storage box also serves as a watering pot. The bottom of the storage box is suitably grooved in order to optimally distribute the water. The germination of seeds can, when desired, be carried out in the storage box. However, the invention described in the publication DE 19512462 does not particularly relate to a combination meant for the cultivation of plants.

The publication DE 2354157 discloses a method for growing herbs, comprising a box and compost, with seeds mixed therein, arranged in the box, as well as a moisture-storing material layer provided on the bottom of said box. The box is kept closed in order to keep the contents dry before implementation.

The French patent publication FR 1275153 discloses a combination suited for plant cultivation, advantageously comprising an aluminum box, a substrate composed of compost, peat and fertilizer, as well as seeds that are accurately placed in the substrate. The accurate positioning of the seeds is achieved by first gluing the seeds onto paper, for instance by water-soluble glue, at suitable intervals. In the box, there is arranged first substrate mixture, on top of it a paper with the seeds attached, and finally on top of it substrate mixture.

The exact composition of the prior art substrates is not known. The employed compost or peat can be any suitable matter, the production methods and original materials whereof are unknown to the consumer, and often to the producer as well. The purity, safety and organic nature of cultivated products are values that require an exact knowledge of the production of the original materials and of the production process of the final product. In the prior art, the substrate is arranged in a container, but it is not particularly pressed therein. A substrate that is loose does not stay in place during transportation. In the prior art, a suggested vessel for the cultivation of plants is for instance an aluminum box. An aluminum box cannot be destroyed, at least not by ecological methods. In known substrates, the need to adjust the pH values according to the special features of each plant to be cultivated has not been taken into account. In known arrangements, the seeds are not precision sown directly in the substrate, but there is needed for example a paper, onto which the seeds are glued. When the seeds are sown in a box or the like that is suitable for their cultivation, the correct sowing depth nor the correct spacing of the seeds, and in particular, the combined effect of these two, have not been observed to be of great importance for the growth.

The object of the present invention is to achieve an arrangement and method whereby the above described drawbacks of the prior art can be minimized.

The above described drawbacks can be eliminated or minimized, and the above mentioned objects can be achieved by means of a combination for plant cultivation, compost, substrate and composting method according to the present invention, which are characterized by what is set forth below, in the characterizing part of the independent claims.

In this text, the term container means a vessel wherein the seeds of the plant to be cultivated and the substrate are inserted in order to germinate the seeds. The term substrate mixture means a mixture, containing at least peat and compost, that is good for the plant to grow in. A dry substrate mixture means that the aqueous content of the substrate mixture is so low, that the seeds do not germinate without watering. Compost is matter created by composting. Gardening peat is a fairly fine-grained, screened peat. Composting peat is loose peat that has a coarser structure than gardening peat. The IP guidelines, i.e. the guidelines for the integrated production of agricultural crops, constitute a set of rules that are internationally known in the agricultural industry for economically producing first-class materials in a way that results in a minimal strain for the environment. The international IP guidelines are set by the International Organization for Biological Control (IOBC), which also functions as the international authority of the integrated production method. Individual countries may have their own IP guidelines that observe their special national conditions. The term organic relates to food production in which, in all steps, there is chosen the alternative that results in the least strain for the environment. In organic agriculture, there are, among others, not used any pesticides or artificial fertilizers; the power of growth of the soil is maintained by organic fertilizers and by the rotation of crops, weeds are eliminated mechanically and insect pests by using their natural enemies. Residues from vegetable refining processes are for instance such vegetables or plants that are removed from the process, for example owing to their size or quality, vegetable skins and peels and any other vegetable parts that are not used as foodstuffs or fodder in the process in question.

The compost in question is characterized in that the vegetable matter is originated in well known sources, and consequently its nutritional value and purity are known. At least an essential part of the compost is formed of the residues from an industrial refining process of known plants and vegetables that are used for foodstuffs or fodder. The created compost is organic product without any intestinally originated manure, and thus for instance diseases caused by the Yersinia and Listeria bacteria are eliminated. Advantageously the compost is made of the skins and peels of root crops, such as potato, rutabaga, turnip, onion and carrot, and/or of the residues of an industrial vegetable refining process. In a particularly advantageous arrangement, the employed plants and vegetables are produced according to the IP guidelines, or by means of organic cultivating methods, in which case the contents of the compost according to the invention are exactly known.

The fact that the vegetable-originated ingredients of the compost are obtained from exactly known sources means that the employed ingredients can be traced back both in terms of quality, geographical origins and operations that they have gone through. The vegetable producer keeps exact records as to what he cultivates and where, and which plants and vegetables are sent to be refined at which point. The vegetable refiner also keeps exact records as to what raw materials are obtained from which farm, and to which purpose said raw materials are used. In the composting step, the follow-up of the raw materials is continued, and all vegetable residues that go to the compost are documented.

The above described documentation can be carried out, and consequently the traceability of the raw materials can be realized at a desired accuracy. Thus, in the final compost product, for instance in said combination according to the invention for plant cultivation, it is possible to exactly tell what plants were used in the product and in which proportions; from which farm, which field, and which part of the field the plants were obtained; when the compost raw materials were produced and how much fertilizers were used. It is even possible to tell how that part of the crops that was not composted was used.

Nowadays both the IP guidelines, rules for organic agriculture and other corresponding rules require that the farmer carries out exact documentation as for fertilization, cultivation areas and many other facts. Previously this information has not, however, been utilized according to the possibilities of modern technology to improve the traceability of raw materials obtained from cultivated products.

The above described gathering and processing of data according to the invention can be realized for instance by means of a computer, a database program run therein and by means of terminals for feeding data into the database program. For instance according to the IP guidelines followed in Finland, fertilization is controlled and observed in a computer-aided fashion. The computer records how much fertilizer is used in each part of the field and respectively how large crops said part of the field produces, and thus obtained information can in turn be used for controlling fertilization. The data produced by said system can be combined with other data collected according to the invention in order to trace the end product according to the invention and to achieve an exact specification for the product.
In the composting method according to the invention, the compost is made by mixing composting peat into vegetable matter; in order to raise the pH value, some suitable agent is mixed in the composting peat. Typically pH is adjusted by adding limestone, and advantageously the employed limestone is dolomite limestone that contains a suitable amount of calcium and magnesium for the needs of the plants. Limestone also is a organic adjusting agent of the pH value. Peat is by nature fairly acidic, and most cultivated plants need a pH value of at least 6 for the substrate in order to grow effectively. Thus obtained compost mixture is composted typically for 6 - 9 days in a drum compostor known as such. The compostor is aired continuously, and the heat and moisture created in the process are removed. From the drum compostor, the compost is transferred to compost pits or the like to be further composted, whereafter the compost is ready for use. In experiments, a composting period of about 6 months has turned out to be suitable. In this method, the vegetable matter is advantageously obtained from wet vegetable skins and peels left over from the peeling process; said skins and peels typically being first pressed in order to drain excess water, before the vegetable matter is mixed in the composting peat.

The compost according to the invention is an excellent raw material for a substrate suitable for cultivating plants. Thus a typical substrate according to the invention contains compost according to the invention and organic gardening peat. By means of adding peat, there is obtained a substrate that is looser in structure, and its nutrient content does not rise too high. The obtained substrate can be used both in industrial-scale cultivation, for instance in greenhouses, and in home-scale cultivation, for instance in kitchen gardens. Typically the substrate is manufactured by mixing organic compost and organic peat, roughly half and half. Advantageously the substrate is dried, by applying the drum drying technique, to water content of less than 10%, so that seeds cannot germinate without watering. Advantageously at least the coarser impurities are removed from the mixture by screening before it is ready for use.
In a typical combination according to the invention meant for plant cultivation, in an essentially water-tight container, such as a pot, box or the like, there is inserted substrate according to the invention. Thereafter the mixture is pressed to the container bottom, so that a fairly compact and smooth surface is obtained. Now on this surface, a desired seed typically acceptable for organic cultivation is sowed. Typically the seeds are sown at optimal intervals with respect to the growth of the plant in question. Typically the seeds are covered with a substrate layer that corresponds to the optimal sowing depth of the plant in question, whereafter the substrate is compressed into its final form. Advantageously a lid is placed on top of the substrate, said lid being for instance a double cardboard support that keeps the substrate and the seeds in place during transportation. An advantageous, completed sown product is provided with detailed instructions for use, and it is packed in an essentially moisture-proof and biodegradable sable package, such as a polyolefin film. The container wherein the substrate and the seeds are packed is advantageously made of a biodegradable material, such as wood pulp.

A typical combination according to the invention for plant cultivation is meant for ordinary households, to be used as a daily product. One of the species chosen to be sown in the substrate is for instance cress that can easily be used at home. Also ornamental plants, such as rye-grass, as well as many plants used to feed pet animals are well suited to be cultivated in a product according to the invention. For the consumer, an organic substrate means a guarantee of a pure and safe product. The sealed package and dried substrate ensure that the product can be stored for long periods. When taken into use, the substrate is moistened and set in a warm and well-lighted place. Watering is continued as long as growth should be maintained. After the product is used, it can be decomposed for instance by composting, because the container is biodegradable.
The plants, the processing residues of which are used in the compost and substrate according to the invention, are advantageously cultivated according to the IP guidelines or organically. This means, among others, that in the cultivation process it is not allowed to use sewage sludge or other waste materials that could cause heavy metals or other harmful materials to be accumulated in the crops and further in the compost and the substrate. Moreover, the field must not, due to earlier usage, contain an accumulation of harmful materials that could cause said risks in the crops.

One of the most important advantages of the invention is that the substrate is made optimal for each plant species individually. Moreover, owing to precision sowing, the seeds are put at an optimal depth and suitably spaced apart.

Another important advantage of the invention is that the growth is easily controlled, because the substrate is easily dried, and thus the germination does not begin until the substrate is watered. The product is dry and therefore it keeps well. The storage and selling period can be even many years.

Yet another important advantage of the invention is that the product is ecological and easy to use, and the food produced thereby is healthy and safe. When the original materials are exactly known, also the composition of the substrate, for instance its nutrient content, is likewise accurately known. There is no need to add fertilizers in the substrate according to the invention. In an organic substrate, it is not allowed to add any fertilizers at all.

Yet another important advantage of the invention is that the substrate that is compressed in a container keeps the precision sown seeds in place also during transportation, thus offering the best possible conditions for growth. Moreover, the compression keeps the package in a neat and tidy shape.

Yet another important advantage of the invention is that the compost and substrate according to the invention do not emit unpleasant odors. When using a traditional animal-originated substrate, particularly when watering it, the smell is remarkable. Moreover, a vegetable-originated compost or substrate does not render unpleasant tastes in the cultivated plants.

The combination according to the invention for plant cultivation shall be described in more detail below with reference to the appended schematical drawings, wherein
Figure 1 illustrates a combination according to the invention, seen from the top, and
Figure 2 illustrates a combination according to Figure 1, seen in a side-view cross-section.

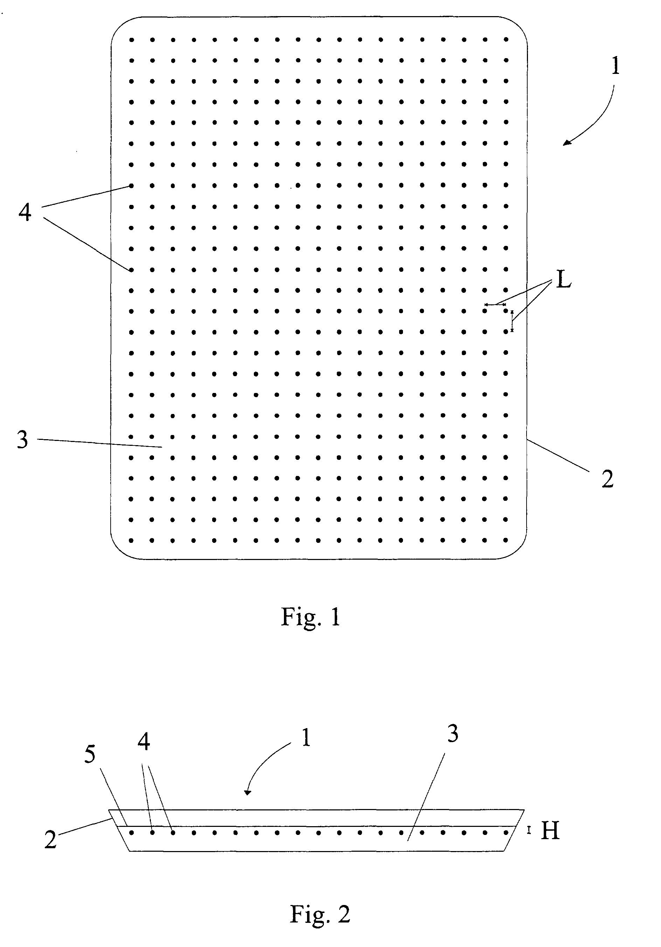

Figures 1 and 2 illustrate a combination 1 according to the invention, where in a vessel 2 made of a biogradable material, such as wood pulp, there is inserted substrate 3 according to the invention as well as seeds 4. The seeds are precision sown in straight lines, at a fairly accurate distance L from each other. All seeds are placed at an essentially similar depth H from the substrate surface 5. The distance L and the sowing depth H are always adjusted according to the cultivated plant, to be optimal for its growth. Typically the length L and the sowing depth H are less than a centimeter and a few centimeters at most. The size of the vessel 2 illustrated in Figures 1 and 2 is advantageously about 150 mm x 200 mm, but the size of the vessel may vary according to the needs of each individual case.

For a man skilled in the art, it is obvious that the invention is not restricted to the above described examples only, but it may vary within scope of the claims set forth below.

## Claims

1. A combination (1) meant for plant cultivation, comprising
- a container (2) and a dry substrate mixture (3) placed therein, and
- seeds (4) placed in the substrate (3) or on the surface (5) thereof,
**characterized in that** the substrate mixture (3) comprises compost and organic gardening peat, and that the compost comprises at least in an essential proportion, advantageously exclusively, residues from the industrial refining processes of known plants used for foodstuffs or fodder.

2. A combination (1) according to claim 1, **characterized in that** the compost is made of plants cultivated according to the IP guidelines and/or organically.

3. A combination (1) according to claim 1 or 2, **characterized in that** the compost is made of the skins and peels of root crops.

4. A combination (1) according to claim 1, 2 or 3, **characterized in that** the compost contains composting peat, where limestone is added in order to raise the pH value.

5. A combination (1) according to any of the preceding claims, **characterized in that** the compost is organic.

6. A combination (1) according to any of the preceding claims, **characterized in that** the substrate is compressed in a container (2).

7. A combination (1) according to any of the preceding claims, **characterized in that** the location of the seeds (4) is precisely determined in advance.

8. A combination (1) according to any of the preceding claims, **characterized in that** the substrate (3) also contains a component for adjusting the pH value to be suitable for the growth of the seeds (4) in question.

9. A combination (1) according to any of the preceding claims, **characterized in that** the container (2) is made of a biodegradable material.

10. A combination (1) according to any of the preceding claims, **characterized in that** the substrate (3) is essentially dry, with water content of less than 10%, and that the combination (1) is packed in a moisture-proof package.

11. A novel compost comprising
- composting peat wherein, in order to raise the pH value, there is added limestone and
- vegetable matter,
**characterized in that** the vegetable matter comprises residues from the industrial refining processes of known plants used for foodstuffs or fodder.

12. A compost according to claim 11, **characterized in that** the vegetable residues are obtained from plants that are cultivated according to the IP guidelines and/or organically.

13. A compost according to claim 11 or 12, **characterized in that** the compost is organic.

14. A novel organic substrate (3), containing at least compost and organic gardening peat, **characterized in that** the compost is a compost according to claim 11, 12 or 13.

15. A composting method where
- a compost is made by mixing composting peat into vegetable matter, in which composting peat there is added, in order to raise the pH value, some pH adjusting agent, advantageously limestone,
- the compost is composted in a drum compostor, and
- the compost is further composted in a compost pit or the like,
**characterized in that** the vegetable matter is obtained from the residues of the industrial refining processes of known plants used for foodstuffs or fodder.

16. A method according to claim 15, **characterized in that** the vegetable matter is obtained from plants, advantageously root crops, cultivated according to the IP guidelines or organically, and particularly advantageously, at least in essential parts, from the skins and peels of root crops.

17. A method according to claim 15 or 16, **characterized in that** prior to making a compost
- wet vegetable matter is ground to make it fine-grained, and
- water is removed from the wet vegetable matter.
